(19) Europäisches Patentamt
European Patent Office
Office européen des brevets

(11) EP 4 704 203 A1

(12) EUROPEAN PATENT APPLICATION

(43) Date of publication:
**04.03.2026 Bulletin 2026/10**

(21) Application number: **25197214.7**

(22) Date of filing: **21.08.2025**

(51) International Patent Classification (IPC):
***H01M 10/0525*** *(2010.01)* ***H01M 10/0565*** *(2010.01)*

(52) Cooperative Patent Classification (CPC):
**H01M 10/0565; H01M 10/0525;** H01M 2300/0085

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.08.2024 KR 20240115980**
**18.08.2025 KR 20250114260**

(71) Applicant: **SK On Co., Ltd.**
**Seoul 03161 (KR)**

(72) Inventors:
- **BAN, Hee Jung**
  **34124 Daejeon (KR)**
- **GO, Hyeon Jin**
  **34124 Daejeon (KR)**
- **PARK, Myung Soo**
  **34124 Daejeon (KR)**
- **LEE, Han Sol**
  **34124 Daejeon (KR)**
- **HAN, Jung Hun**
  **34124 Daejeon (KR)**
- **RYU, Hye Min**
  **34124 Daejeon (KR)**
- **CHOI, Jae Hoon**
  **34124 Daejeon (KR)**

(74) Representative: **Prüfer & Partner mbB**
**Patentanwälte · Rechtsanwälte**
**Sohnckestraße 12**
**81479 München (DE)**

# (54) POLYMER ELECTROLYTE FOR LITHIUM SECONDARY BATTERY AND LITHIUM SECONDARY BATTERY INCLUDING THE SAME

(57) A polymer electrolyte for a lithium secondary battery according to the embodiments of the present disclosure includes a fluorine-based solvent including a fluorine-containing cyclic carbonate, a fluorine-containing linear carbonate, and a fluorine-containing ether; a lithium salt; and a flame retardant polymer containing phosphorus and fluorine, wherein the content of the fluorine-containing cyclic carbonate, based on the total volume of the fluorine-based solvent, is greater than 20 vol% and less than or equal to 40 vol%.

[FIG. 1]

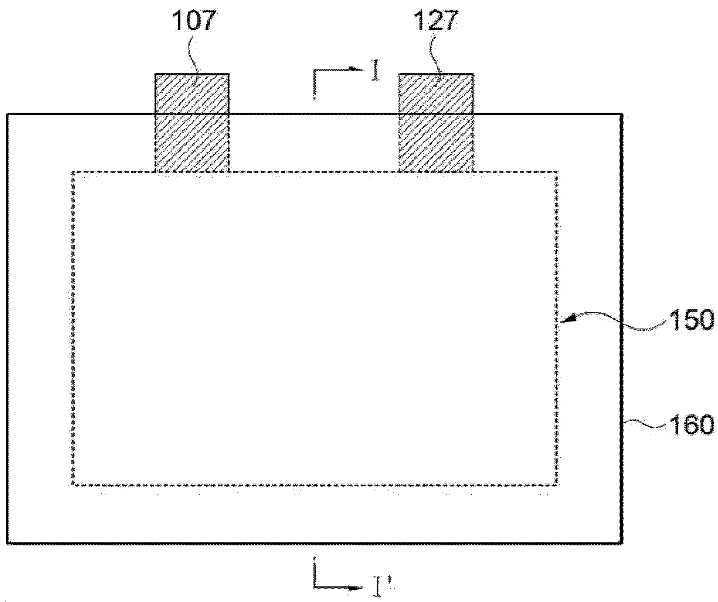


EP 4 704 203 A1

## Description

[BACKGROUND OF THE INVENTION]

1. Field of the Invention

The present disclosure relates to a polymer electrolyte for a lithium secondary battery and a lithium secondary battery including the same. More specifically, the present disclosure relates to a polymer electrolyte for a lithium secondary battery, which includes a solvent and a polymer, and a lithium secondary battery including the polymer electrolyte.

2. Description of the Related Art

Secondary batteries are batteries that can be repeatedly charged and discharged. With the development of information and communication and display industries, the secondary batteries have been widely applied as power sources for portable electronic communication devices, such as camcorders, mobile phones, and laptop PCs. In addition, battery packs including the secondary batteries have recently been developed and applied as power sources for eco-friendly vehicles, such as hybrid cars.

Examples of the secondary battery include a lithium secondary battery, a nickelcadmium battery, and a nickel-hydrogen battery. Among these, lithium secondary batteries are actively being researched and developed due to their high operating voltage, high energy density per unit weight, and advantages in charging speed and weight reduction.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

When the electrolyte included in the lithium secondary battery is in a liquid state, there is a risk of leakage and explosion. Therefore, in order to improve safety, an electrolyte including a fluorine-containing solvent and a fluorine-containing polymer may be used. However, the fluorine-containing solvent and fluorine-containing polymer may exhibit low flame retardancy.

[SUMMARY OF THE INVENTION]

An object of the present disclosure is to provide a polymer electrolyte with improved flame retardancy.

Another object of the present disclosure is to provide a lithium secondary battery with improved flame retardancy.

A polymer electrolyte for a lithium secondary battery according to exemplary embodiments of the present disclosure may include: a fluorine-based solvent including a fluorine-containing cyclic carbonate, a fluorine-containing linear carbonate, and a fluorine-containing ether; a lithium salt; and a flame retardant polymer containing phosphorus and fluorine, wherein the content of the fluorine-containing cyclic carbonate, based on the total volume of the fluorine-based solvent, may be greater than 20% by volume and less than or equal to 40% by volume.

In some embodiments, the content of the fluorine-containing cyclic carbonate, based on the total volume of the fluorine-based solvent, may be 21% by volume to 31% by volume.

In some embodiments, the content of the fluorine-containing linear carbonate, based on the total volume of the fluorine-based solvent, may be 35% by volume or more and less than 60% by volume.

In some embodiments, the content of the fluorine-containing ether, based on the total volume of the fluorine-based solvent, may be 20% by volume to 40% by volume.

In some embodiments, a ratio of the content by volume of the fluorine-containing linear carbonate to the content by volume of the fluorine-containing cyclic carbonate, based on the total volume of the fluorine-based solvent, may be 0.35 to 1.0.

In some embodiments, the fluorine-containing cyclic carbonate may include at least one selected from the group consisting of monofluoroethylene carbonate, difluoroethylene carbonate, trifluoroethylene carbonate, tetrafluoroethylene carbonate, trifluoropropylene carbonate, and monofluoropropylene carbonate.

In some embodiments, the fluorine-containing linear carbonate may include at least one selected from the group consisting of monofluoroethyl methyl carbonate, monofluorodimethyl carbonate, monofluorodiethyl carbonate, difluoroethyl methyl carbonate, difluorodimethyl carbonate, trifluorodiethyl carbonate, trifluoroethyl methyl carbonate, trifluoroethyl propyl carbonate, and trifluorodimethyl carbonate.

In some embodiments, the fluorine-containing ether may include at least one selected from the group consisting of tetrafluoroethyl tetrafluoropropyl ether, tetrafluoroethyl pentafluoropropyl ether, tetrafluoroethyl trifluoroethyl ether, tetrafluoropropyl hexafluoropropyl ether, and pentafluoropropyl hexafluoropropyl ether.

In some embodiments, the flame retardant polymer may include a moiety derived from a (meth)acrylate group.

In some embodiments, the flame retardant polymer may include a first structural unit represented by Formula 1 below and a second structural unit represented by Formula 2 below:

[Formula 1]

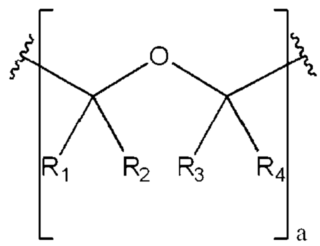

In Formula 1, $R_1$ to $R_4$ may each independently be a hydrogen atom or a fluorine atom, at least one of $R_1$ to $R_4$ may be a fluorine atom, and a may be an integer from 1 to 10.

[Formula 2]

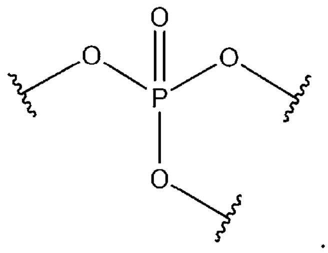

In some embodiments, the lithium salt may include at least one selected from the group consisting of $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

In some embodiments, the content of the fluorine-based solvent, based on the total weight of the polymer electrolyte, may be 70% by weight to 95% by weight, the content of the lithium salt may be 0.1% by weight to 20% by weight, and the content of the flame retardant polymer may be 2.5% by weight to 20% by weight.

A composition for a polymer electrolyte of a lithium secondary battery according to exemplary embodiments of the present disclosure may include: a fluorine-based solvent including a fluorine-containing cyclic carbonate, a fluorine-containing linear carbonate, and a fluorine-containing ether; a lithium salt; a flame retardant monomer containing phosphorus; and a flame retardant monomer containing fluorine, wherein the content of the fluorine-containing cyclic carbonate, based on the total volume of the fluorine-based solvent, may be greater than 20% by volume and less than or equal to 40% by volume.

A lithium secondary battery according to exemplary embodiments of the present disclosure may include: a case; an electrode assembly including a cathode and an anode accommodated within the case; and the polymer electrolyte for a lithium secondary battery according to the above-described embodiments, wherein the polymer electrolyte is injected into the case.

In some embodiments, the electrode assembly may further include a separation membrane interposed between the cathode and the anode.

According to exemplary embodiments of the present disclosure, the polymer electrolyte for a lithium secondary battery may include a flame retardant polymer containing phosphorus and fluorine, and a fluorine-based solvent. The content of the fluorine-containing cyclic carbonate, based on the total volume of the fluorine-based solvent, may be greater than 20% by volume ("vol%") and less than or equal to 40% by volume.

Accordingly, the flame retardancy of the polymer electrolyte may be improved, and the safety and cycle life characteristics of the lithium secondary battery including the polymer electrolyte may be enhanced.

The polymer electrolyte may be widely applied in green technology fields, such as electric vehicles, battery charging stations, as well as solar power generation, wind power generation, and the like, which use the batteries. In addition, the lithium secondary battery may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIGS. 1 and 2 are schematic plan and cross-sectional views illustrating a lithium secondary battery according to exemplary embodiments; and
FIG. 3 is a graph illustrating electrochemical impedance of polymer electrolytes according to exemplary embodiments.

[DETAILED DESCRIPTION OF THE INVENTION]

Unless otherwise defined, all technical and scientific terms used herein have the same meaning as commonly understood by one of ordinary skill in the art to which the present disclosure pertains. Terms used in the description of the present disclosure are merely intended to effectively describe specific embodiments and are not intended to limit the present disclosure.
The singular forms "a," "an" and "the" are intended to include plural forms as well, unless the context clearly indicates otherwise.
Hereinafter, unless otherwise defined in the present specification, when a portion such as a layer, film, thin film, region, or plate is described as being "on" or "above" another portion, it may refer not only to a case where the portion is directly on the other portion, but also to a case where another portion is interposed therebetween.
The term "A and/or B" as used in the present specification may refer to an embodiment including both A and B, or an embodiment including either A or B.
As used herein, the term "polymer" includes an oligomer, and includes both homopolymers and copolymers. The copolymer may include any one or more of an alternating copolymer, block copolymer, random copolymer, branched copolymer, crosslinked copolymer, or combinations thereof.
As used herein, the term "alkyl" refers to an organic radical derived from an aliphatic hydrocarbon by the removal of one hydrogen atom, and may include both straight and branched chains. The alkyl may have 1 to 10 carbon atoms, specifically 1 to 7 carbon atoms, more specifically 1 to 5 carbon atoms, and still more specifically 1 to 3 carbon atoms. Examples of the alkyl include, but are not limited to, methyl, ethyl, propyl, isopropyl, butyl, isobutyl, tert-butyl, pentyl, hexyl, and ethylhexyl.
Hereinafter, unless otherwise defined in the present specification, the term "(meth)acryl" may be used to refer collectively to both "methacryl" and "acryl."
As used herein, the term "A-based compound" may refer to a compound including a functional group A or a derivative thereof.
As used herein, the term "polymer electrolyte" may refer not only to an all-solid-state electrolyte, but also to a gel polymer electrolyte in which an electrolyte solution is included in a polymer-based matrix. For example, the gel polymer electrolyte may be in the form of a physical gel prepared by swelling a polymer matrix with an electrolyte solution, or in the form of a chemical gel prepared by curing a composition in which the electrolyte solution and a monomer are mixed.
Hereinafter, embodiments of the present disclosure will be described in more detail with reference to the accompanying drawings. However, the following drawings attached to the present specification are merely for illustrating exemplary embodiments of the present disclosure and for aiding in the understanding of the technical spirit of the present disclosure together with the description above. Therefore, the present disclosure should not be construed as being limited to the matters illustrated in such drawings.
One embodiment provides a polymer electrolyte for a lithium secondary battery including a fluorine-based solvent of a specific composition, a lithium salt, and a flame retardant polymer containing phosphorus and fluorine. In addition, a lithium secondary battery including the polymer electrolyte for a lithium secondary battery is provided.

**<Polymer electrolyte for a lithium secondary battery>**

A polymer electrolyte for a lithium secondary battery (hereinafter, also abbreviated as a "polymer electrolyte") according to exemplary embodiments may include a fluorine-based solvent, a lithium salt, and a flame retardant polymer containing phosphorus and fluorine.
The fluorine-based solvent may include a fluorine-containing cyclic carbonate, a fluorine-containing linear carbonate, and a fluorine-containing ether, and the content of the fluorine-containing cyclic carbonate, based on the total volume of the fluorine-based solvent, may be greater than 20 vol% and less than or equal to 40% by volume.
For example, by including the fluorine-based solvent, it is possible to provide a polymer electrolyte having a high flash point, excellent chemical resistance, thermal properties, and electrochemical stability, and capable of forming a

stable electrode-electrolyte interface (LiF or F-rich layer).

In some embodiments, the fluorine-containing cyclic carbonate may include at least one selected from the group consisting of monofluoroethylene carbonate (MFEC), difluoroethylene carbonate (DFEC), trifluoroethylene carbonate (TFEC), tetrafluoroethylene carbonate, trifluoropropylene carbonate (TFPC), and monofluoropropylene carbonate (MFPC).

In some embodiments, the fluorine-containing linear carbonate may include at least one selected from the group consisting of monofluoroethyl methyl carbonate, monofluorodimethyl carbonate, monofluorodiethyl carbonate, difluoroethyl methyl carbonate, difluorodimethyl carbonate, trifluorodiethyl carbonate, trifluoroethyl methyl carbonate, trifluoroethyl propyl carbonate, and trifluorodimethyl carbonate.

In one embodiment, the fluorine-containing linear carbonate may include at least one selected from the group consisting of 1-fluoroethyl methyl carbonate (FEMC), methyl 2,2,2-trifluoroethyl carbonate (TFEMC), ethyl 2,2,2-trifluoroethyl carbonate (ETFEC), and propyl 2,2,2-trifluoroethyl carbonate (PTFEC).

In some embodiments, the fluorine-containing ether may include at least one selected from the group consisting of tetrafluoroethyl tetrafluoropropyl ether, tetrafluoroethyl pentafluoropropyl ether, tetrafluoroethyl trifluoroethyl ether, tetrafluoropropyl hexafluoropropyl ether, and pentafluoropropyl hexafluoropropyl ether.

In one embodiment, the fluorine-containing ether may include at least one selected from the group consisting of 1,1,2,2-tetrafluoroethyl-2,2,3,3-tetrafluoropropyl ether, 1,1,2,2-tetrafluoroethyl-2,2,3,3,3-pentafluoropropyl ether, 1,1,2,2-tetrafluoroethyl-2,2,2-trifluoroethyl ether, 2,2,3,3-tetrafluoropropyl-1,1,2,3,3,3-hexafluoropropyl ether, and 2,2,3,3,3-pentafluoropropyl-1,1,2,3,3,3-hexafluoropropyl ether.

For example, the fluorine-based solvent may include fluoroethylene carbonate (FEC), methyl 2,2,2-trifluoroethyl carbonate (FEMC), and 1,1,2,2-tetrafluoroethyl-2,2,2-trifluoroethyl ether (TTE). For example, the fluorine-based solvent may be substantially composed of the FEC, FEMC, and TTE.

For example, the fluorine-based solvent may include a fluorine-containing ether together with a fluorine-containing cyclic carbonate and a fluorine-containing linear carbonate, thereby providing a sufficiently cured flame retardant polymer. If the fluorine-based solvent does not include a fluorine-containing ether, the flame retardant monomer may not undergo gelation.

In some embodiments, the content of the fluorine-containing cyclic carbonate, based on the total volume of the fluorine-based solvent, may be greater than 20 vol% and less than or equal to 40% by volume.

In some embodiments, the content of the fluorine-containing cyclic carbonate, based on the total volume of the fluorine-based solvent, may be 21% to 38 vol%, 21% to 35 vol%, 23% to 35 vol%, 25% to 35 vol%, 21% to 33 vol%, or 21% to 31 vol%.

If the content of the fluorine-containing cyclic carbonate, based on the total volume of the fluorine-based solvent, is 20 vol% or less, lithium salt may be precipitated, which may deteriorate the safety of the battery and prevent gelation of the monomer that forms the flame retardant polymer. If the content thereof exceeds 40 vol%, the flame retardant polymer may not be sufficiently cured, and the flame retardancy of the polymer electrolyte may deteriorate.

In some embodiments, the content of the fluorine-containing linear carbonate, based on the total volume of the fluorine-based solvent, may be 35 vol% or more and less than 60 vol%.

In some embodiments, the content of the fluorine-containing linear carbonate, based on the total volume of the fluorine-based solvent, may be 38 vol% or more and less than 60 vol%, 40 vol% to 58 vol%, 43 vol% to 57 vol%, or 45 vol% to 57 vol%.

Within the above range, the degree of curing and flame retardancy of the polymer electrolyte may be improved, thereby enhancing the safety and ionic conductivity of the lithium secondary battery.

In some embodiments, the content of the fluorine-containing ether, based on the total volume of the fluorine-based solvent, may be 20 vol% to 40 vol%.

In some embodiments, the content of the fluorine-containing ether, based on the total volume of the fluorine-based solvent, may be 21 vol% to 35 vol%, 21 vol% to 30 vol%, or 22 vol% to 25 vol%.

Within the above range, the flame retardant polymer may be sufficiently cured and the flame retardancy may be further improved.

In some embodiments, a ratio of the content by volume of the fluorine-containing linear carbonate to the content by volume of the fluorine-containing cyclic carbonate, based on the total volume of the fluorine-based solvent, may be 0.35 to 1.0.

In some embodiments, the ratio of the content by volume of the fluorine-containing cyclic carbonate to that of the fluorine-containing linear carbonate, based on the total volume of the fluorine-based solvent, may be 0.35 to 0.9, 0.35 to 0.85, 0.35 to 0.83, 0.36 to 0.82, 0.36 to 0.80, or 0.36 to 0.75.

Within the above range, the flame retardancy of the polymer electrolyte and the safety of the lithium secondary battery may be further improved.

In some embodiments, the lithium salt may include at least one selected from the group consisting of $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$,

$LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

In one embodiment, the lithium salt may include $LiPF_6$.

The concentration of the lithium salt dissolved in the fluorine-based solvent may be 0.5 M to 3 M. For example, the concentration of the lithium salt may be 0.5 M to 3 M, 0.8 M to 1.5 M, or 0.8 M to 1.2 M. Within the above range, the mobility of lithium ions and/or electrons may be enhanced.

In some embodiments, the flame retardant polymer may include a moiety derived from a (meth)acrylate group.

In some embodiments, the flame retardant polymer may be formed by polymerization of a flame retardant monomer containing phosphorus and a flame retardant monomer containing fluorine. For example, the flame retardant polymer may include a unit derived from a phosphate group-containing compound and a unit derived from a fluorinated ethylene oxide compound.

In some embodiments, the flame retardant polymer may include a first structural unit represented by Formula 1 below and a second structural unit represented by Formula 2 below.

[Formula 1]

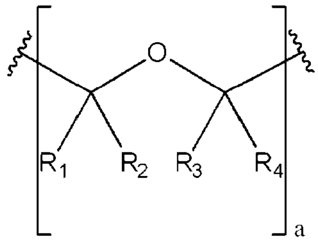

In Formula 1, $R_1$ to $R_4$ may each independently be a hydrogen atom or a fluorine atom, at least one of $R_1$ to $R_4$ may be a fluorine atom, and a may be an integer from 1 to 10.

For example, at least two of $R_1$ to $R_4$ may be fluorine atoms. For example, all of $R_1$ to $R_4$ may be fluorine atoms.

For example, a may be an integer from 1 to 8, an integer from 1 to 5, an integer from 1 to 3, or an integer from 2.

[Formula 2]

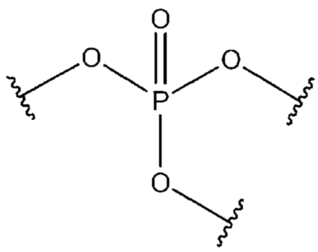

By including the flame retardant polymer together with the above-described fluorine-based solvent, the flame retardancy and degree of curing of the polymer electrolyte may be further improved, and the safety and cycle life characteristics of the lithium secondary battery may be further enhanced.

When the lithium secondary battery burns, highly active H radicals and OH radicals may be generated, and these radicals may induce a chain combustion reaction. Without being bound by any particular theory, the flame retardant polymer according to an embodiment may inhibit the chain combustion reaction by releasing P radicals that capture the highly active H radicals and OH radicals.

The flame retardant polymer according to an embodiment may generate F radicals during high-temperature decomposition to capture OH radicals, and may have a high flash point, excellent chemical resistance, thermal properties, and electrochemical stability, and may form a stable electrode-electrolyte interface (LiF or F-rich layer).

The flame retardant polymer having the above-described structural unit includes both phosphorus and fluorine, and therefore may suppress an increase in resistance caused by side reactions between the electrode and the electrolyte, enhance the safety of the polymer electrolyte, and form a stable electrode-electrolyte interface.

For example, a phosphate group-containing monomer and a fluorinated ethylene oxide-containing monomer may be polymerized to form a polymer network, thereby further inhibiting the decomposition of the polymer electrolyte.

Accordingly, the polymer electrolyte including the above-described flame retardant polymer containing phosphorus and fluorine may be used to manufacture a lithium secondary battery with improved safety, ionic conductivity and cycle life characteristics.

In some embodiments, the content of the fluorine-based solvent, based on the total weight of the polymer electrolyte, may be 70 wt% to 95 wt%, the content of the lithium salt may be 0.1 wt% to 20 wt%, and the content of the flame retardant polymer may be 2.5 wt% to 20 wt%.

In some embodiments, the content of the fluorine-based solvent, based on the total weight of the polymer electrolyte, may be 75 wt% to 95 wt%, 80 wt% to 95 wt%, or 85 wt% to 95 wt%.

In some embodiments, the content of the lithium salt may be 0.5 wt% to 15 wt%, 3 wt% to 13 wt%, or 5 wt% to 10 wt%.

In some embodiments, the content of the flame retardant polymer may be 2.5 wt% to 15 wt%, 3 wt% to 10 wt%, or 4 wt% to 8 wt%.

Within the above range, the flame retardancy of the polymer electrolyte may be further improved, and the safety, ionic conductivity, and cycle life characteristics of the lithium secondary battery may be further enhanced.

In some embodiments, the ionic conductivity of the polymer electrolyte may be 0.13 mS/cm or more, 0.14 mS/cm or more, or 0.145 mS/cm or more.

In general, polymer electrolytes may have lower ionic conductivity than liquid electrolytes. However, the above-described polymer electrolyte includes the flame retardant polymer containing phosphorus and fluorine, such that a reduction in lithium ions due to side reactions between the electrode and the electrolyte may be suppressed. Therefore, the ionic conductivity of the lithium secondary battery may be increased, and lithium ion diffusion characteristics may be improved.

In some embodiments, the polymer electrolyte may be a non-aqueous electrolyte that does not contain water.

According to exemplary embodiments, a composition for a polymer electrolyte of a lithium secondary battery may include a fluorine-based solvent, a lithium salt, a flame retardant monomer containing phosphorus, and a flame retardant monomer containing fluorine.

The fluorine-based solvent may include a fluorine-containing cyclic carbonate, a fluorine-containing linear carbonate, and a fluorine-containing ether, and the content of the fluorine-containing cyclic carbonate, based on the total volume of the fluorine-based solvent, may be greater than 20 vol% and less than or equal to 40% by volume.

The description of the fluorine-based solvent and the lithium salt is the same as that of the fluorine-based solvent and the lithium salt in the description of the polymer electrolyte for a lithium secondary battery.

In some embodiments, the flame retardant monomer containing fluorine may include a fluorinated ethylene oxide group and two or more (meth)acrylate groups.

In some embodiments, the flame retardant monomer containing fluorine may include a compound having a structure represented by Formula 3 below.

[Formula 3]

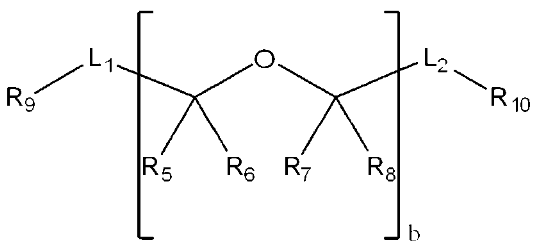

In Formula 3, $R_5$ to $R_8$ may each independently be a hydrogen atom or a fluorine atom, at least one of $R_5$ to $R_8$ is a fluorine atom, $R_9$ and $R_{10}$ may each independently be an acryloyloxy group or a methacryloyloxy group, $L_1$ and $L_2$ may each independently be an alkylene group having 1 to 10 carbon atoms, and b may be an integer from 1 to 10. For example, at least two of $R_5$ to $R_8$ may be fluorine atoms.

For example, at least two of $R_5$ to $R_8$ may be fluorine atoms. For example, all of $R_5$ to $R_8$ may be fluorine atoms. For example, the hydrogen atom included in the acryloyloxy group or the methacryloyloxy group may be optionally substituted with a fluorine atom or a phosphorus atom.

For example, $L_1$ and $L_2$ may each independently be an alkylene group having 1 to 8 carbon atoms, 1 to 5 carbon atoms, 1 to 3 carbon atoms, or a methylene group, and b may be an integer from 1 to 8, an integer from 1 to 5, an integer from 1 to 3, or 2.

In one embodiment, the flame retardant monomer containing fluorine may have a structure represented by Formula 4 below.

[Formula 4]

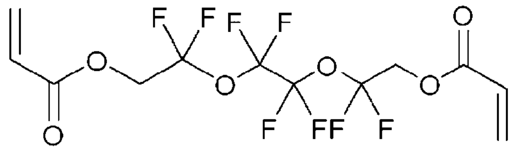

In some embodiments, the flame retardant monomer containing phosphorus may include a phosphate group and two or more (meth)acrylate groups.

In some embodiments, the flame retardant monomer containing phosphorus may include a compound having a structure represented by Formula 5 below.

[Formula 5]

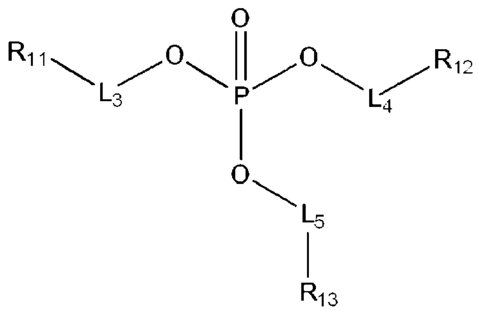

In Formula 5, $R_{11}$ to $R_{13}$ may each independently be an acryloyloxy group or a methacryloyloxy group, and $L_3$ to $L_5$ may each independently be an alkylene group having 1 to 10 carbon atoms.

For example, the hydrogen atom included in the acryloyloxy group or the methacryloyloxy group may be optionally substituted with a fluorine atom or a phosphorus atom.

For example, $L_3$ to $L_5$ may each independently be an alkylene group having 1 to 8 carbon atoms, 1 to 5 carbon atoms, 1 to 3 carbon atoms, or a methylene group.

In one embodiment, the flame retardant monomer containing phosphorus may have a structure represented by Formula 6 below.

[Formula 6]

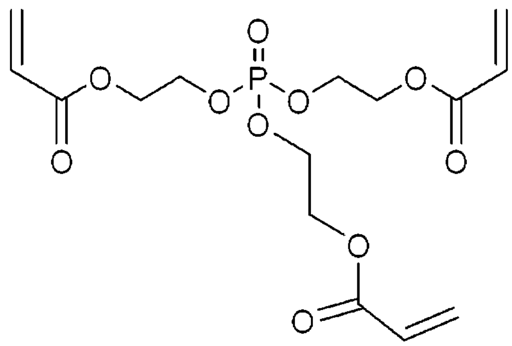

In some embodiments, the weight ratio of the flame retardant monomer containing phosphorus to the flame retardant monomer containing fluorine may be 1:9 to 9:1, 2:8 to 8:2, 3:7 to 7:3, or 4:6 to 6:4. Within the above range, the content of phosphorus and fluorine is appropriate to obtain a polymer having sufficient flame retardancy.

In some embodiments, the content of the fluorine-based solvent, based on the total weight of the polymer electrolyte for the lithium secondary battery, may be 70 wt% to 95 wt%, the content of the lithium salt may be 0.1 wt% to 20 wt%, and the sum of the contents of the flame retardant monomer containing phosphorus and the flame retardant monomer containing fluorine may be 2.5 wt% to 20 wt%.

In some embodiments, the polymer electrolyte for a lithium secondary battery may further include at least one

initiator selected from the group consisting of a photo-initiator and a thermal initiator, and the content of the initiator may be 0.001 wt% to 0.1 wt%, 0.01 wt% to 0.08 wt%, 0.02 wt% to 0.06 wt%, or 0.04 wt% to 0.05 wt%.

For example, photo-initiators such as acetophenones, anthraquinones, ketals, benzophenones, and oxime esters may be used, and thermal initiators such as t-butyl peroxypivalate (t-BPP), dicumyl peroxide (DCP), and azobisisobutyronitrile (AIBN) may be used.

In some embodiments, the above-described flame retardant monomer containing phosphorus and the flame retardant monomer containing fluorine may be thermally cured or photo-cured to form the flame retardant polymer.

For example, the above-described flame retardant monomer containing phosphorus and the flame retardant monomer containing fluorine may be thermally polymerized at 50°C to 90°C for 40 minutes to 70 minutes to obtain the flame retardant polymer.

**<Lithium secondary battery>**

FIGS. 1 and 2 are schematic plan and cross-sectional views illustrating a lithium secondary battery according to exemplary embodiments, respectively. For example, FIG. 2 is a cross-sectional view taken along line I-I' of FIG. 1.

The secondary battery structure shown in FIGS. 1 and 2 is schematically illustrated, and the secondary battery structure according to the disclosure of the present application is not limited to the illustrated example.

Referring to FIGS. 1 and 2, the lithium secondary battery may include an electrode assembly 150 including a cathode 100 and an anode 130. The electrode assembly 150 may be accommodated within a case 160 together with the above-described polymer electrolyte according to the exemplary embodiments. For example, the electrode assembly 150 may further include a solid electrolyte 140 interposed between the cathode 100 and the anode 130. Optionally, a separation membrane may further be included between the cathode 100 and the anode 130.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector may also include aluminum or stainless steel having a surface treated with carbon, nickel, titanium or silver. For example, the cathode current collector 105 may have a thickness of 10 μm to 50 μm.

For example, the cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one selected from the group consisting of cobalt (Co) and manganese (Mn).

For example, the lithium-transition metal oxide may have a structure represented by Formula 7 below.

[Formula 7] $Li_{1+a}Ni_{1-(x+y)}Co_xM_yO_2$

**In** Formula 7 above, a, x and y may satisfy $-0.05 \leq a \leq 0.15$, $0.01 \leq x \leq 0.3$, and $0.01 \leq y \leq 0.3$, and M may be one or more elements selected from Mn, Mg, Sr, Ba, B, Al, Si, Ti, Zr and W.

In some embodiments, the cathode active material may include lithium metal phosphate particles having a structure represented by Formula 8 below.

[Formula 8] $Li_wM_xP_yO_{4+z}$

In Formula 8, w, x, y and z may satisfy $0.9 \leq w \leq 1.2$, $0.99 \leq x \leq 1.01$, $0.9 \leq y \leq 1.2$, and $-0.1 \leq z \leq 0.1$, and M may be one or more elements selected from Fe, Ni, Mn, Ti and V.

For example, in Formula 8, M may be Fe, and the cathode active material may include a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 9 below.

For example, the cathode active material core may include a chemical structure or crystal structure represented by Formula 9 below.

[Formula 9] $p[Li_2MnO_3]\cdot(1-p)[Li_qJO_2]$

In Formula 9, p and q may satisfy $0<p<1$, and $0.9 \leq q \leq 1.2$, and J may include at least one element selected from Mn, Ni, Fe, Cr, V, Cu, Zn, Ti, Al, Mg and B.

For example, the cathode active material may be dispersed in a solvent to prepare a cathode slurry. The cathode

slurry may be coated on the cathode current collector 105, and then dried and roll-pressed to prepare the cathode 100. The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally may further include a conductive material, a thickener and the like.

Non-limiting examples of solvents used in the preparation of the cathode slurry include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer layer in consideration of enhancing the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), and carbon fibers, and/or metal-based conductive materials, including perovskite materials, such as tin, tin oxide, titanium oxide, $LaSrCoO_3$, and $LaSrMnO_3$.

As the thickener, for example, carboxymethyl cellulose (CMC) may be used.

The anode 130 may include an anode current collector 125 and an anode active material layer 120 disposed on at least one surface of the anode current collector 125.

For example, non-limiting examples of the anode current collector 125 may include a copper foil, a nickel foil, a stainless steel foil, a titanium foil, a nickel foam, a copper foam, a polymer substrate coated with a conductive metal and the like. The anode current collector may have, for example, a thickness of 10 $\mu$m to 50 $\mu$m, but it is not limited thereto.

The anode active material layer 120 may include an anode active material. As the anode active material, a material capable of intercalating and deintercalating lithium ions may be used. For example, as the anode active material, carbon-based materials such as crystalline carbon, amorphous carbon, carbon composite, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing active material may provide further increased capacity characteristics. The silicon-containing active material may include Si, $SiO_x$ ($0<x<2$), a silicon-carbon composite, a metal-doped silicate, or $SiO_x$ ($0<x<2$). The metal may include lithium and/or magnesium.

For example, the anode active material may be dispersed in a solvent to prepare an anode slurry. The anode slurry may be coated on the anode current collector, and then dried and roll-pressed to prepare an anode. The coating process may be performed using methods such as gravure coating, slot die coating, simultaneous multilayer die coating, imprinting, doctor blade coating, dip coating, bar coating or casting, etc., but it is not limited thereto. The anode slurry may further include a binder, and optionally may further include a conductive material, a thickener and the like.

In some embodiments, the anode may include an anode active material layer in the form of a lithium metal formed through a deposition/coating process.

Non-limiting examples of the solvent for the anode slurry may include water, pure water, deionized water, distilled water, ethanol, isopropanol, methanol, acetone, n-propanol, t-butanol, etc.

The above-described materials that can be used when manufacturing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder.

In one embodiment, the solid electrolyte 140 may be interposed between the cathode 100 and the anode 130.

Optionally, a separation membrane may be interposed between the cathode 100 and the anode 130. The separation membrane may prevent electrical short-circuit between the cathode and the anode, and maintain flow of ions. According to an embodiment, the separation membrane may have a thickness of 10 $\mu$m to 20 $\mu$m, but in the present disclosure, it is not limited thereto.

The separation membrane may include a porous polymer film or a porous non-woven fabric. The porous polymer

film may include a polyolefin polymer such as an ethylene polymer, a propylene polymer, an ethylene/butene copolymer, an ethylene/hexene copolymer, and an ethylene/methacrylate copolymer. The porous non-woven fabric may include glass fibers having a high melting point, polyethylene terephthalate fibers and the like.

The separation membrane may also include a ceramic material. For example, inorganic particles may be coated on the polymer film or dispersed in the polymer film to improve heat resistance.

The separation membrane may have a single-layer or multi-layer structure including the above-described polymer film and/or non-woven fabric.

In some embodiments, the anode 130 may have a greater area and/or volume than the cathode 100. Accordingly, lithium ions generated from the cathode 100 may migrate smoothly to the anode 130 without precipitation in the middle, for example.

According to exemplary embodiments, an electrode cell may be defined by the cathode 100, the anode 130, and the solid electrolyte 140, and a plurality of electrode cells may be stacked to form, for example, a jelly roll type electrode assembly 150.

In some embodiments, the electrode assembly 150 may have a jelly roll shape formed by winding, stacking, z-folding, or stack-folding the solid electrolyte 140.

Optionally, the electrode cell may be defined by the cathode 100, the anode 130, and the separation membrane, and the jelly roll type electrode assembly 150 may be formed by winding, stacking, z-folding, or stack-folding the separation membrane.

In one embodiment, the electrode assembly 150 may have a jelly roll shape formed by winding the cathode 100, the anode 130, and the solid electrolyte 140 together. In one embodiment, the electrode assembly 150 may have a jelly roll shape in which the cathodes and anodes are arranged in spaces formed by repeatedly z-folding the solid electrolyte 140.

In one embodiment, the electrode assembly may be formed by repeatedly stacking the cathode, the anode, and the solid electrolyte, each being cut or separated into layers.

For example, electrode tabs (cathode tabs and anode tabs) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

For example, a pouch-type case, a prismatic case, a cylindrical case, or a coin-type case may be used.

The electrode assembly 150 may be accommodated in the case 160 together with an electrolyte to define the lithium secondary battery.

For example, the above-described polymer electrolyte according to the exemplary embodiments may be used in the manufacture of not only lithium secondary batteries, but also sodium secondary batteries, potassium secondary batteries, calcium secondary batteries and the like.

## Synthetic Example

### 1. Preparation of flame retardant monomer containing phosphorus

**4.94** g (32.2 mmol) of $POCl_3$ and 10.75 g (106.2 mmol) of triethylamine (TEA) were sequentially weighed and introduced into a reactor containing 100 mL of dichloromethane. The reactor was cooled to 0°C, and 11.59 g (99.8 mmol) of 2-hydroxyethyl acrylate was then slowly added over 30 minutes. The mixture was stirred for an additional 24 hours at room temperature, and washed twice each with an aqueous $NaHCO_3$ solution and water ($H_2O$). Thereafter, the solvent was removed by drying under reduced pressure, and the concentrated solution was purified by column chromatography using hexane and ethyl acetate to obtain 9.24 g of flame retardant monomer I having a structure represented by Formula 6 below.

[Formula 6]

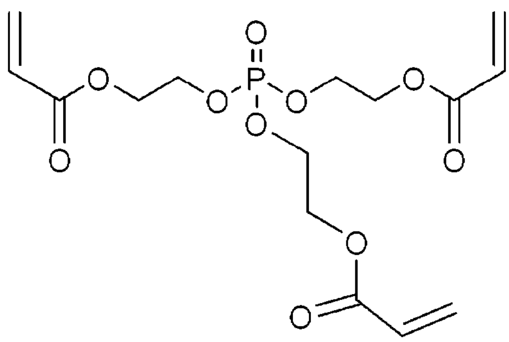

## 2. Preparation of flame retardant monomer containing fluorine

10 g (34.0 mmol) of perfluoro-3,6-dioxaoctane-1,8-diol and 7.91 g (78.2 mmol) of triethylamine were sequentially weighed and introduced into a reactor containing 100 mL of tetrahydrofuran (THF). The reactor was cooled to 0°C, and 6.31 g (69.7 mmol) of acryloyl chloride was then slowly added over 1 hour. The mixture was stirred at room temperature for 18 hours, and filtered to remove the triethylamine hydrochloride (TEA-HCl) salt. The filtrate was collected, and tetrahydrofuran (THF) was removed by distillation under reduced pressure. The solvent was then changed to dichloromethane, and the mixture was washed once each with an aqueous 0.1 N HCl solution, an aqueous $NaHCO_3$ solution, and deionized water (DIW). Thereafter, the solvent was removed by drying under reduced pressure, and the concentrated solution was purified by column chromatography using hexane and ethyl acetate to obtain 9.6 g of flame retardant monomer II having a structure represented by Formula 4 below.

[Formula 4]

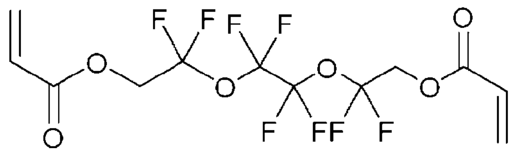

## Examples and Comparative Examples

### 1. Example 1

### (1) Preparation of polymer electrolyte

Fluoroethylene carbonate (FEC), methyl (2,2,2-trifluoroethyl) carbonate (FEMC), and 1, 1,2,2-tetrafluoroethyl-2,2,2-trifluoroethyl ether (TTE), which are fluorine-based solvents, were mixed in a volume ratio of 21:57:22, and stirred at room temperature (25°C) for 6 hours to prepare a mixed solvent. Subsequently, 1 M LiPF6 was dissolved in the mixed solvent, and stirred for 6 hours to prepare an electrolyte solution.

The flame retardant monomers I and II obtained in the synthesis example were added to the prepared electrolyte solution at an equal weight ratio (1:1), stirred for 5 hours, and then t-butylperoxy pivalate (t-BPP), a thermal initiator, was added and stirred for 3 hours. Thereafter, the mixture was heated to 70°C and maintained at that temperature for 1 hour to prepare a polymer electrolyte.

The contents of the mixed solvent, lithium salt, flame retardant polymer (including the mixing ratio of the flame retardant monomers), and initiator, based on the total weight of the polymer electrolyte, are listed in Table 1 below, and the contents of fluorine-based solvents, based on the total volume of the mixed solvent, are listed in Table 2 below.

### (2) Manufacture of lithium secondary battery

$Li[Ni_{0.6}Co_{0.2}Mn_{0.2}]O_2$ as a cathode active material, carbon black as a conductive material, and polyvinylidene fluoride (PVdF) as a binder were mixed at a weight ratio of 92:5:3 to prepare a slurry. The slurry was uniformly applied to an aluminum foil having a thickness of 15 μm, and vacuum-dried at 130°C. The dried slurry was roll-pressed to fabricate a cathode for a lithium secondary battery with a density of 3.2 g/cm$^3$.

Natural graphite as an anode active material, styrene-butadiene rubber/carboxymethyl cellulose (SBR/CMC) as a binder, and carbon black as a conductive material were mixed at a weight ratio of 96:3:1 to prepare an anode slurry. The anode slurry was uniformly applied to a copper foil, and then dried and roll-pressed to fabricate an anode.

Polyethylene (PE) was prepared as a separation membrane. The cathode and anode were disposed to face each other with the separation membrane therebetween to form a coin cell.

The coin cell was placed in a coin cell plate, and 50 μL of a stirred solution including the electrolyte solution, flame retardant monomer I, flame retardant monomer II, and a thermal initiator, as prepared in (1) above, was then injected into the coin cell plate. A cap was then mounted and clamped.

Thereafter, thermal curing was performed at 70°C for 1 hour to manufacture a secondary battery including an electrolyte for a secondary battery.

## 2. Examples and Comparative Examples

Polymer electrolytes and lithium secondary batteries were manufactured in the same manner as in Example 1, except that the composition of the polymer electrolyte was modified as shown in Table 1 below, and the composition of the mixed solvent (i.e., the types and contents of the fluorine-based solvents) was modified as shown in Table 2 below.

[TABLE 1]

| | Lithium salt | Mixed solvent | Flame retardant polymer | Initiator |
|---|---|---|---|---|
| Example 1 | $LiPF_6$ (8.75 wt%) | FEC+FEMC+TTE (86.2 wt%) | Flame retardant monomer I: Flame retardant monomer II=1:1 (5.0 wt%) | t-BPP (0.05 wt%) |
| Example 2 | $LiPF_6$ (9.2 wt%) | FEC+FEMC+TTE (85.75 wt%) | Flame retardant monomer I: Flame retardant monomer II=1:1 (5.0 wt%) | t-BPP (0.05 wt%) |
| Example 3 | $LiPF_6$ (9.3 wt%) | FEC+FEMC+TTE (85.65 wt%) | Flame retardant monomer I: Flame retardant monomer II=1:1 (5.0 wt%) | t-BPP (0.05 wt%) |
| Example 4 | $LiPF_6$ (9.7 wt%) | FEC+FEMC+TTE (85.25 wt%) | Flame retardant monomer I: Flame retardant monomer II=1:1 (5.0 wt%) | t-BPP (0.05 wt%) |
| Comparative Example 1 | $LiPF_6$ (9.7 wt%) | FEC+FEMC (85.25 wt%) | Flame retardant monomer I: Flame retardant monomer II=1:1 (5.0 wt%) | t-BPP (0.05 wt%) |
| Comparative Example 2 | $LiPF_6$ (9.6 wt%) | FEC+FEMC (85.35 wt%) | Flame retardant monomer I: Flame retardant monomer II=1:1 (5.0 wt%) | t-BPP (0.05 wt%) |
| Comparative Example 3 | $LiPF_6$ (9.4 wt%) | FEC+FEMC+TTE (85.55 wt%) | Flame retardant monomer I: Flame retardant monomer II=1:1 (5.0 wt%) | t-BPP (0.05 wt%) |
| Comparative Example 4 | $LiPF_6$ (9.1 wt%) | FEC+FEMC+TTE (85.85 wt%) | Flame retardant monomer I: Flame retardant monomer II=1:1 (5.0 wt%) | t-BPP (0.05 wt%) |
| Comparative Example 5 | $LiPF_6$ (9.5 wt%) | FEC+FEMC+TTE (85.45 wt%) | Flame retardant monomer I: Flame retardant monomer II=1:1 (5.0 wt%) | t-BPP (0.05 wt%) |

[TABLE 2]

| | FEC content (vol%) | FEMC content (vol%) | TTE content (vol%) |
|---|---|---|---|
| Example 1 | 21 | 57 | 22 |
| Example 2 | 31 | 47 | 22 |
| Example 3 | 25 | 53 | 22 |
| Example 4 | 35 | 43 | 22 |
| Comparative Example 1 | 10 | 90 | 0 |
| Comparative Example 2 | 30 | 70 | 0 |
| Comparative Example 3 | 11 | 67 | 22 |
| Comparative Example 4 | 41 | 37 | 22 |
| Comparative Example 5 | 51 | 27 | 22 |

## Evaluation

**Evaluation 1: Determination of gelation**

The gelation of polymer electrolytes according to the examples and comparative examples was evaluated by visual observation, and the evaluation results based on the evaluation criteria are described in Table 3 below.

<Evaluation criteria>

◦: Polymer electrolyte was cured (greater than 80 vol% of the polymer electrolyte was cured)
△: Polymer electrolyte was cured but failed to retain its shape
×: Polymer electrolyte was not cured or lithium salt was precipitated

**Evaluation 2: Measurement of self-extinguishing time**

The polymer electrolytes according to Examples 1 to 4 and Comparative Examples 1 to 5 were impregnated into a 14 pi glass fiber filter, ignited with a torch for 2 seconds, and the burning time was measured. The self-extinguishing time (g/s) was calculated according to Equation 1 below, and the results are shown in Table 3 below.

[Equation 1]

$$\text{Self-extinguishing time (g/s)} = \text{Polymer electrolyte weight (g)} \div \text{Ignition time (s)}$$

(In Equation 1, the polymer electrolyte weight (g) is obtained by subtracting the "weight of the glass fiber filter measured before impregnation of the polymer electrolyte" from the "weight of the glass fiber filter measured after impregnation with the polymer electrolyte.")

**Evaluation 3: DSC thermal analysis**

Thermal analysis was performed on the lithium secondary batteries according to Examples 1 to 4 and Comparative Examples 1 to 5 using differential scanning calorimetry (DSC) (SOC 100%, heating rate: 5°C/min, temperature range: 25°C to 500°C).
The onset temperature (°C) of the exothermic reaction and exothermic heat (J/g) of the cathode were measured, and the results are shown in Table 3 below.

**Evaluation 4: Evaluation of capacity characteristics and cycle life characteristics**

The lithium secondary batteries according to Examples 1 to 4 and Comparative Examples 1 to 5 were charged (0.1C(CC-CV), 0.05C 4.2V CUT-OFF) in a chamber at 25°C, and the battery capacity (initial charge capacity) was measured. The batteries were then discharged (CC 0.1C 2.5V CUT-OFF), and the battery capacity (initial discharge capacity) was measured. The initial Coulombic efficiency was calculated by dividing the measured initial discharge capacity by the measured initial charge capacity and multiplying the result by 100. The charging and discharging steps were repeated once more.
Thereafter, constant current charging was performed at 0.5C up to 4.2V at room temperature (25°C), followed by constant voltage charging at 4.2V until the current decreased to 0.05C. Subsequently, discharging was performed at 0.5C down to 2.5V, and this charge-discharge process was repeated 148 times. The capacity retention was calculated by dividing the discharge capacity at each cycle by the initial discharge capacity. The results are shown in Table 4 below.

**Evaluation 5: Evaluation of ionic conductivity**

The ionic conductivity was measured by electrochemical impedance spectroscopy (EIS).
The polymer electrolytes according to Examples 1 to 4 were loaded onto a polyethylene (PE) separation membrane in an amount of 80 μL, and brought into contact with a stainless steel (SUS(Steel Use Stainless, Type 304)) substrate. Then, an AC voltage was applied through the electrodes on both sides of the sample to measure the impedance (Frequency range: 1 Hz to 7 MHz, Amplitude: 10 mV conditions).
FIG. 3 shows impedance graphs for the polymer electrolytes of Examples 1 to 4. The resistance of the polymer

electrolyte was obtained from the intersection (R) where the semicircle or straight line of the trajectory meets the real axis, and the ionic conductivity was calculated from the cross-sectional area and thickness of the prepared polymer electrolyte sample using Equation 2 below.

[Equation 2]

$$\sigma = t \div (R \times A)$$

(In Equation 2, σ is the ionic conductivity(mS/cm), t is the thickness(cm), A is the cross-sectional area($cm^2$),, and R is the electrolyte resistance(Ω).)

The calculated ionic conductivities of the polymer electrolytes of Examples 1 to 4 were 0.147, 0.160, 0.155, and 0.164 mS/cm, respectively.

[TABLE 3]

| | Whether gelation occurred | Self-extinguishing time (g/s) | Onset temperature (°C) of exothermic reaction | Exothermic heat (J/g) |
|---|---|---|---|---|
| Example 1 | ○ | 0 | 201.4 | 115.8 |
| Example 2 | ○ | 0 | 201.1 | 110.9 |
| Example 3 | ○ | 0 | 199.4 | 108.3 |
| Example 4 | ○ | 0 | 198.5 | 107.4 |
| Comparative Example 1 | ○ | 2 | 199.1 | 140.2 |
| Comparative Example 2 | ○ | 0 | 197.5 | 130.7 |
| Comparative Example 3 | X | 5 | 185.2 | 140.5 |
| Comparative Example 4 | △ | 7 | 178.9 | 145.8 |
| Comparative Example 5 | △ | 8 | 175.8 | 148.7 |

[TABLE 4]

| | Discharge capacity (mAh/g) (@ 1 cycle) | Discharge capacity (mAh/g) (@ 3 cycles) | Capacity retention (%) (@ 150 cycles) | Initial Coulombic efficiency (%) |
|---|---|---|---|---|
| Example 1 | 194.6 | 178.3 | 92.1 | 83.9 |
| Example 2 | 195.3 | 179.8 | 93.4 | 84.2 |
| Example 3 | 198.9 | 189.7 | 95.9 | 84.8 |
| Example 4 | 197.4 | 185.8 | 94.7 | 84.7 |
| Comparative Example 1 | 195.4 | 175.2 | 90.5 | 82.1 |
| Comparative Example 2 | 195.2 | 180.8 | 93.5 | 83.2 |
| Comparative Example 3 | 192.1 | 180.1 | 88.2 | 83.1 |
| Comparative Example 4 | 193.5 | 174.0 | 89.0 | 83.2 |
| Comparative Example 5 | 190.2 | 172.8 | 85.2 | 82.9 |

Referring to Table 3, the polymer electrolytes of Examples 1 to 4, which included a fluorine-containing cyclic carbonate, a fluorine-containing linear carbonate, and a fluorine-containing ether at a predetermined volume ratio, exhibited excellent ionic conductivity, while the flame retardant polymer was sufficiently cured and the flame retardancy was improved.

In Comparative Examples 1 and 3 to 5, where the content of the fluorine-containing cyclic carbonate was 20 vol% or less, or more than 40 vol%, the polymer electrolyte was not cured, the onset temperature of the exothermic reaction was reduced, and the exothermic heat was increased.

In Comparative Examples 1 and 2, which did not include a fluorine-containing ether, the exothermic heat was higher.

Referring to Table 4, in the lithium secondary batteries manufactured using the polymer electrolytes of Examples 1 to 4, the capacity characteristics and cycle life characteristics were improved.

The invention is also defined by the following aspects:

Asepct 1. A polymer electrolyte for a lithium secondary battery comprising: a fluorine-based solvent comprising a fluorine-containing cyclic carbonate, a fluorine-containing linear carbonate, and a fluorine-containing ether; a lithium salt; and a flame retardant polymer containing phosphorus and fluorine, wherein the content of the fluorine-containing cyclic carbonate, based on the total volume of the fluorine-based solvent, is greater than 20% by volume and less than or equal to 40% by volume.

Aspect 2. The polymer electrolyte for a lithium secondary battery according to claim 1, wherein the content of the fluorine-containing cyclic carbonate, based on the total volume of the fluorine-based solvent, is 21% by volume to 31% by volume.

Aspect 3. The polymer electrolyte for a lithium secondary battery according to aspect 1 or 2, wherein the content of the fluorine-containing linear carbonate, based on the total volume of the fluorine-based solvent, is 35% by volume or more and less than 60% by volume.

Aspect 4. The polymer electrolyte for a lithium secondary battery according to any one of aspect 1 to 3, wherein the content of the fluorine-containing ether, based on the total volume of the fluorine-based solvent, is 20% by volume to 40% by volume.

Aspect 5. The polymer electrolyte for a lithium secondary battery according to any one of aspect 1 to 4, wherein a ratio of the content by volume of the fluorine-containing linear carbonate to the content by volume of the fluorine-containing cyclic carbonate, based on the total volume of the fluorine-based solvent, is 0.35 to 1.0.

Aspect 6. The polymer electrolyte for a lithium secondary battery according to any one of aspect 1 to 5, wherein the fluorine-containing cyclic carbonate comprises at least one selected from the group consisting of monofluoroethylene carbonate, difluoroethylene carbonate, trifluoroethylene carbonate, tetrafluoroethylene carbonate, trifluoropropylene carbonate, and monofluoropropylene carbonate.

Aspect 7. The polymer electrolyte for a lithium secondary battery according to any one of aspect 1 to 6, wherein the fluorine-containing linear carbonate comprises at least one selected from the group consisting of monofluoroethyl methyl carbonate, monofluorodimethyl carbonate, monofluorodiethyl carbonate, difluoroethyl methyl carbonate, difluorodimethyl carbonate, trifluorodiethyl carbonate, trifluoroethyl methyl carbonate, trifluoroethyl propyl carbonate, and trifluorodimethyl carbonate.

Aspect 8. The polymer electrolyte for a lithium secondary battery according to any one of aspect 1 to 7, wherein the fluorine-containing ether comprises at least one selected from the group consisting of tetrafluoroethyl tetrafluoropropyl ether, tetrafluoroethyl pentafluoropropyl ether, tetrafluoroethyl trifluoroethyl ether, tetrafluoropropyl hexafluoropropyl ether, and pentafluoropropyl hexafluoropropyl ether.

Aspect 9. The polymer electrolyte for a lithium secondary battery according to any one of aspect 1 to 8, wherein the flame retardant polymer comprises a moiety derived from a (meth)acrylate group.

Aspect 10. The polymer electrolyte for a lithium secondary battery according to any one of aspect 1 to 9, wherein the flame retardant polymer comprises a first structural unit represented by Formula 1 below and a second structural unit represented by Formula 2 below:

[Formula 1]

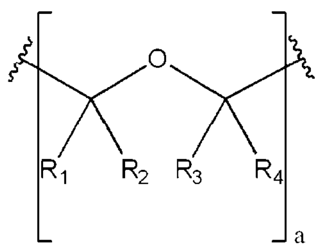

(in Formula 1, $R_1$ to $R_4$ are each independently a hydrogen atom or a fluorine atom, at least one of $R_1$ to $R_4$ is a fluorine atom, and a is an integer from 1 to 10),

[Formula 2]

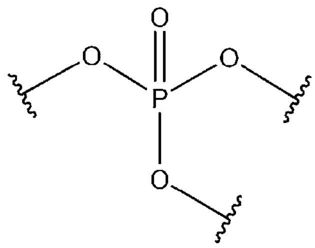

.

Aspect 11. The polymer electrolyte for a lithium secondary battery according to any one of aspect 1 to 10, wherein the lithium salt comprises at least one selected from the group consisting of $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

Aspect 12. The polymer electrolyte for a lithium secondary battery according to any one of aspect 1 to 11, wherein the content of the fluorine-based solvent, based on the total weight of the polymer electrolyte, is 70% by weight to 95% by weight, the content of the lithium salt is 0.1% by weight to 20% by weight, and the content of the flame retardant polymer is 2.5% by weight to 20% by weight.

Aspect 13. A composition for a polymer electrolyte of a lithium secondary battery comprising: a fluorine-based solvent comprising a fluorine-containing cyclic carbonate, a fluorine-containing linear carbonate, and a fluorine-containing ether; a lithium salt; a flame retardant monomer containing phosphorus; and a flame retardant monomer containing fluorine, wherein the content of the fluorine-containing cyclic carbonate, based on the total volume of the fluorine-based solvent, is greater than 20% by volume and less than or equal to 40% by volume.

Aspect 14. A lithium secondary battery comprising: a case; an electrode assembly comprising a cathode and an anode accommodated within the case; and the polymer electrolyte for a lithium secondary battery according to any one of aspect 1 to 13, wherein the polymer electrolyte is injected into the case.

Aspect 15. The secondary battery according to aspect 14, wherein the electrode assembly further comprises a separation membrane interposed between the cathode and the anode.

[Description of Reference Numerals]

100: Cathode
105: Cathode current collector
107: Cathode lead
110: Cathode active material layer
120: Anode active material layer
125: Anode current collector
127: Anode lead
130: Anode
140: Solid electrolyte
150: Electrode assembly
160: Case

**Claims**

**1.** A polymer electrolyte for a lithium secondary battery comprising:

a fluorine-based solvent comprising a fluorine-containing cyclic carbonate, a fluorine-containing linear carbonate, and a fluorine-containing ether;
a lithium salt; and
a flame retardant polymer containing phosphorus and fluorine,
wherein the content of the fluorine-containing cyclic carbonate, based on the total volume of the fluorine-based solvent, is greater than 20% by volume and less than or equal to 40% by volume.

2. The polymer electrolyte for a lithium secondary battery according to claim 1, wherein the content of the fluorine-containing cyclic carbonate, based on the total volume of the fluorine-based solvent, is 21% by volume to 31% by volume.

3. The polymer electrolyte for a lithium secondary battery according to claim 1 or 2, wherein the content of the fluorine-containing linear carbonate, based on the total volume of the fluorine-based solvent, is 35% by volume or more and less than 60% by volume.

4. The polymer electrolyte for a lithium secondary battery according to any one of claims 1 to 3, wherein the content of the fluorine-containing ether, based on the total volume of the fluorine-based solvent, is 20% by volume to 40% by volume.

5. The polymer electrolyte for a lithium secondary battery according to any one of claims 1 to 4, wherein a ratio of the content by volume of the fluorine-containing linear carbonate to the content by volume of the fluorine-containing cyclic carbonate, based on the total volume of the fluorine-based solvent, is 0.35 to 1.0.

6. The polymer electrolyte for a lithium secondary battery according to any one of claims 1 to 5, wherein the fluorine-containing cyclic carbonate comprises at least one selected from the group consisting of monofluoroethylene carbonate, difluoroethylene carbonate, trifluoroethylene carbonate, tetrafluoroethylene carbonate, trifluoropropylene carbonate, and monofluoropropylene carbonate.

7. The polymer electrolyte for a lithium secondary battery according to any one of claims 1 to 6, wherein the fluorine-containing linear carbonate comprises at least one selected from the group consisting of monofluoroethyl methyl carbonate, monofluorodimethyl carbonate, monofluorodiethyl carbonate, difluoroethyl methyl carbonate, difluorodimethyl carbonate, trifluorodiethyl carbonate, trifluoroethyl methyl carbonate, trifluoroethyl propyl carbonate, and trifluorodimethyl carbonate.

8. The polymer electrolyte for a lithium secondary battery according to any one of claims 1 to 7, wherein the fluorine-containing ether comprises at least one selected from the group consisting of tetrafluoroethyl tetrafluoropropyl ether, tetrafluoroethyl pentafluoropropyl ether, tetrafluoroethyl trifluoroethyl ether, tetrafluoropropyl hexafluoropropyl ether, and pentafluoropropyl hexafluoropropyl ether.

9. The polymer electrolyte for a lithium secondary battery according to any one of claims 1 to 8, wherein the flame retardant polymer comprises a moiety derived from a (meth)acrylate group.

10. The polymer electrolyte for a lithium secondary battery according to any one of claims 1 to 9, wherein the flame retardant polymer comprises a first structural unit represented by Formula 1 below and a second structural unit represented by Formula 2 below:

[Formula 1]

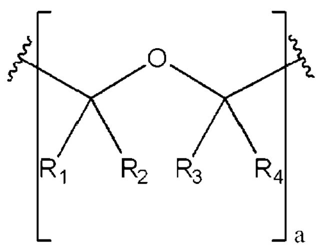

(in Formula 1, $R_1$ to $R_4$ are each independently a hydrogen atom or a fluorine atom, at least one of $R_1$ to $R_4$ is a fluorine atom, and a is an integer from 1 to 10),

[Formula 2]

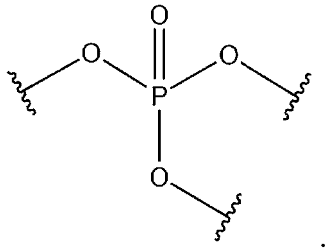

11. The polymer electrolyte for a lithium secondary battery according to any one of claims 1 to 10, wherein the lithium salt comprises at least one selected from the group consisting of $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

12. The polymer electrolyte for a lithium secondary battery according to any one of claims 1 to 11, wherein the content of the fluorine-based solvent, based on the total weight of the polymer electrolyte, is 70% by weight to 95% by weight, the content of the lithium salt is 0.1% by weight to 20% by weight, and the content of the flame retardant polymer is 2.5% by weight to 20% by weight.

13. A composition for a polymer electrolyte of a lithium secondary battery comprising:

a fluorine-based solvent comprising a fluorine-containing cyclic carbonate, a fluorine-containing linear carbonate, and a fluorine-containing ether;
a lithium salt;
a flame retardant monomer containing phosphorus; and
a flame retardant monomer containing fluorine,
wherein the content of the fluorine-containing cyclic carbonate, based on the total volume of the fluorine-based solvent, is greater than 20% by volume and less than or equal to 40% by volume.

14. A lithium secondary battery comprising:

a case;
an electrode assembly comprising a cathode and an anode accommodated within the case; and
the polymer electrolyte for a lithium secondary battery according to any one of claims 1 to 13, wherein the polymer electrolyte is injected into the case.

15. The secondary battery according to claim 14, wherein the electrode assembly further comprises a separation membrane interposed between the cathode and the anode.

[FIG. 1]

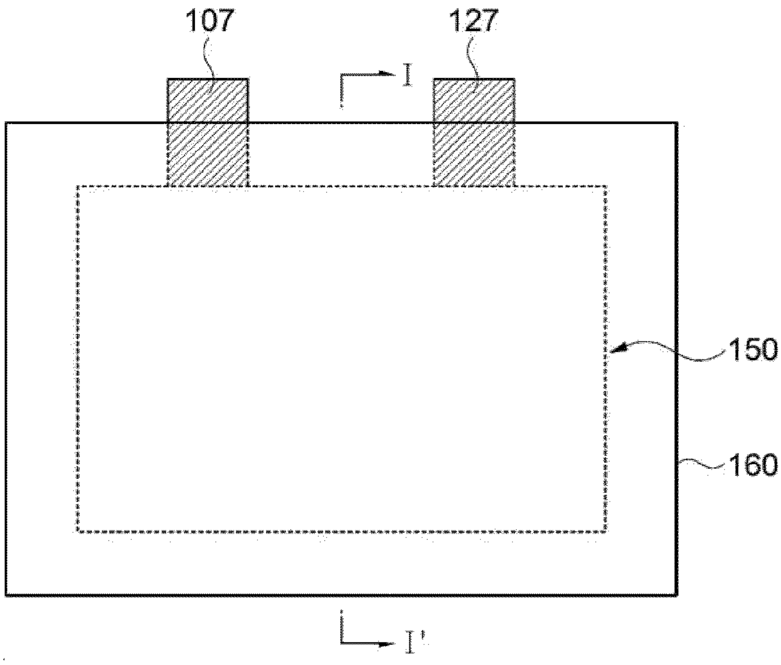


[FIG. 2]

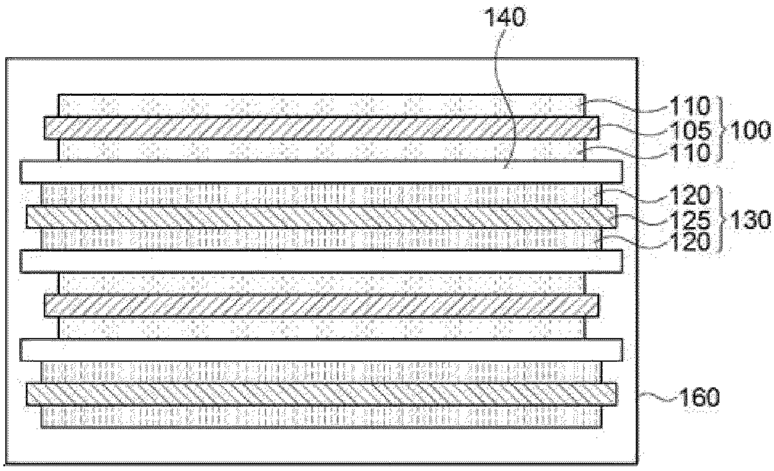

[FIG. 3]

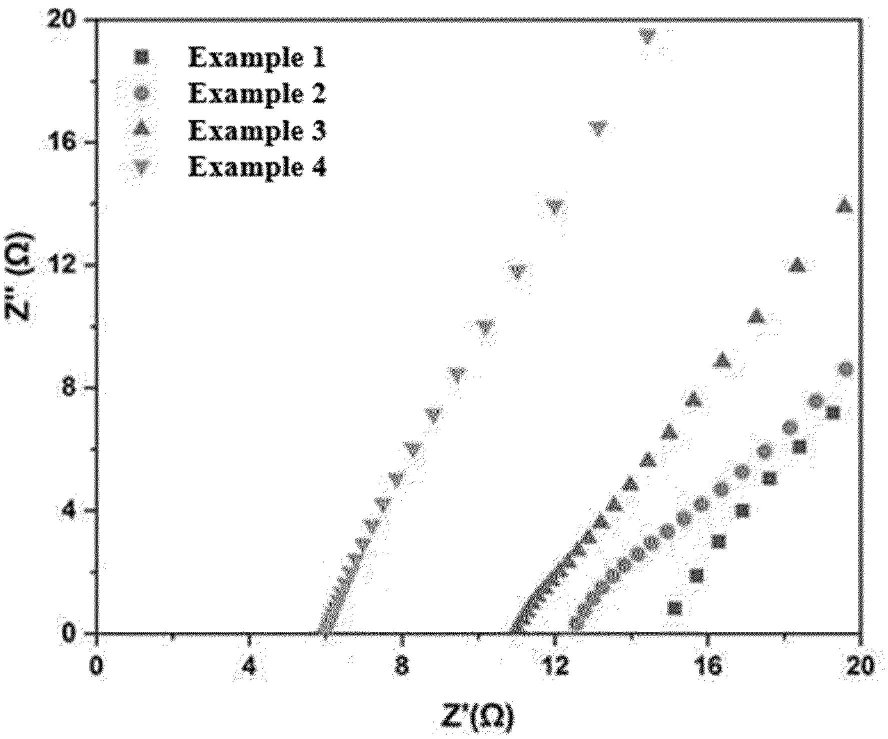

Europäisches Patentamt
European Patent Office
Office européen des brevets

# EUROPEAN SEARCH REPORT

Application Number
EP 25 19 7214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br><br><br>A | EP 4 394 975 A1 (SK ON CO LTD [KR]; SK INNOVATION CO LTD [KR])<br>3 July 2024 (2024-07-03)<br>* claims; example 1; paragraph 57 *<br>----- | 1-9,<br>11-15<br><br>10 | INV.<br>H01M10/0525<br>H01M10/0565 |
| Y<br><br>A | EP 0 924 788 A1 (SHARP KK [JP])<br>23 June 1999 (1999-06-23)<br>* claims, in particular claims 2 and 5; paragraphs 13-15 and 56-57*<br>----- | 1-9,<br>11-15<br>10 | |

TECHNICAL FIELDS SEARCHED (IPC)
H01M

The present search report has been drawn up for all claims

1

| Place of search | Date of completion of the search | Examiner |
|---|---|---|
| Munich | 16 January 2026 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 19 7214

This annex lists the patent family members relating to the patent documents cited in the above-mentioned European search report. The members are as contained in the European Patent Office EDP file on
The European Patent Office is in no way liable for these particulars which are merely given for the purpose of information.

16-01-2026

| Patent document cited in search report | | Publication date | Patent family member(s) | | | Publication date |
|---|---|---|---|---|---|---|
| EP 4394975 | A1 | 03-07-2024 | CN | 118263530 | A | 28-06-2024 |
| | | | EP | 4394975 | A1 | 03-07-2024 |
| | | | JP | 2024095615 | A | 10-07-2024 |
| | | | KR | 20240105050 | A | 05-07-2024 |
| | | | US | 2024266614 | A1 | 08-08-2024 |
| | | | US | 2024429467 | A1 | 26-12-2024 |
| EP 0924788 | A1 | 23-06-1999 | DE | 69829032 | T2 | 05-01-2006 |
| | | | EP | 0924788 | A1 | 23-06-1999 |
| | | | JP | 3394172 | B2 | 07-04-2003 |
| | | | JP | H11172096 | A | 29-06-1999 |
| | | | US | 6465135 | B1 | 15-10-2002 |

EPO FORM P0459

For more details about this annex : see Official Journal of the European Patent Office, No. 12/82